# EUROPEAN PATENT APPLICATION

(11) **EP 2 928 007 A1**
(43) Date of publication of application: **07.10.2015**
(21) Application number: 15161915.2
(22) Date of filing: 31.03.2015
(51) Int. Cl.: H01M 10/46, H01L 35/32, H02J 1/12, H02J 1/14, H02N 2/18, H01L 35/00

(54) **Multiple energy harvester power system**

(30) Priority: 02.04.2014 US 201414243414
(71) Applicant: Simmonds Precision Products, Inc., Vergennes, VT 05491 (US)
(72) Inventor: Pearson, Matthew Robert, Hartford, CT Connecticut 06103 (US)
(74) Representative: Hughes, Andrea Michelle

(57) **Abstract**

A power system (10) includes a first energy harvester (14), a second energy harvester (16), a power conditioning unit (18), and a load (12). The first energy harvester (14) is configured to produce a first voltage. The second energy harvester (16) is configured to produce a second voltage. The first voltage is greater than the second voltage. The power conditioning unit (18) is configured to condition power produced by the second energy harvester (16). The power conditioning unit (18) is powered by the first voltage. The load (12) is configured to receive the conditioned power from the power conditioning unit (18).

## Description

### BACKGROUND

The present invention relates generally to power systems, and in particular to a system and method for powering remote loads utilizing multiple energy harvesters.

Remote loads, such as sensors onboard an aircraft, must receive power for operation. Traditional wired power is often provided, but requires routing of the wires to the load. This adds complexity, weight and cost to the system. Therefore, it is desirable to power the load in a wireless manner.

To provide wireless power to a load, prior art systems have utilized remote batteries. These batteries provide the necessary power for the load, but discharge over time and eventually require replacement. Depending upon the location of the remote system, replacement of a battery can be a costly event. For example, if a remote sensor is located within a gas turbine engine or aircraft equipment bay, the engine or bay may necessitate some form of disassembly just to reach the battery and thus, it is not economical to require replacement of a battery on a regular basis. It is desirable to provide a remote power system that does not require either the use of wired power or reliance upon battery power.

### SUMMARY

A power system (claim 1) includes a first energy harvester, a second energy harvester, and a power conditioning unit. The first energy harvester is configured to produce a first power output at a first voltage. The second energy harvester is configured to produce a second power output at a second voltage. The second voltage is less than the first voltage, and the second power output is greater than the first power output. The power conditioning unit is configured to condition the second power output to provide conditioned power to a load, wherein the power conditioning unit is powered by the first power output.

### BRIEF DESCRIPTION OF THE DRAWINGS

FIG. 1 is a block diagram illustrating a system for powering a sensor utilizing multiple energy harvesters.
FIG. 2 is a block diagram illustrating a method of powering a sensor utilizing multiple energy harvesters.

### DETAILED DESCRIPTION

A power system is disclosed herein that includes multiple energy harvesters to provide remote power for a load. The power system includes a first energy harvester that produces a high voltage with a low power output, and a second energy harvester that produces a low voltage with a high power output. The high voltage from the first energy harvester is utilized to wake up and power a conditioning unit. The high power from the second energy harvester is conditioned by the conditioning unit and utilized to power a load. This allows a remote load, such as a sensor, computer processor, wireless transmitter, or a combination of these to be powered without routing wires or implementing a permanent battery.

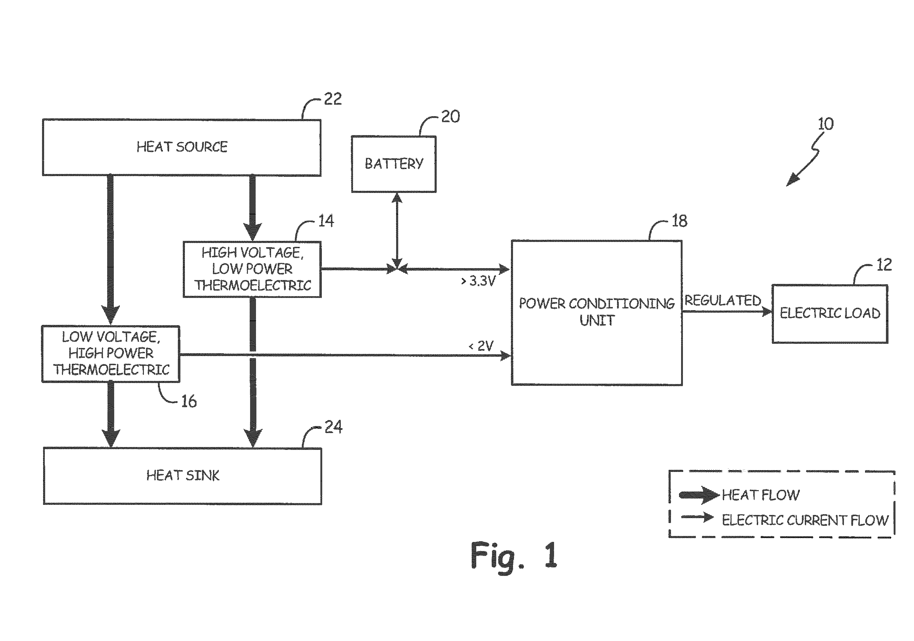

FIG. 1 is a block diagram illustrating power system 10 that powers load 12 using energy harvesters 14 and 16. System 10 includes load 12, energy harvesters 14 and 16, power conditioning unit 18, optional backup battery 20, heat source 22 and heat sink 24. System 10 may be, for example, a system located within a gas turbine engine of an aircraft, or on an air-cycle machine in an aircraft. Load 12 is any load that may receive remote power, such as a sensor within a gas turbine engine, or a sensor within an air-cycle machine. Backup battery 20 is optional, and system 10 may power load 12 without the use of battery 20.

Power conditioning unit 18 may be utilized to condition the power provided to load 12. Load 12 may be, for example, a silicon based sensor. Silicon based devices may require a constant voltage greater than, for example, 3.3 volts for operation. Power conditioning unit 18 receives an input power at a varying voltage and provides output power at an approximately constant voltage equal to, for example, 3.3 volts to load 12. Power conditioning unit 18 is any unit capable of providing this type of conditioning such as, for example, a Maxim Integrated^{™} MAX17710 chip. These chips supply the constant output voltage using, for example, boost regulators and adjustable low-dropout linear regulators.

Energy harvesters 14 and 16 may be, for example, thermoelectric devices. Thermoelectric energy harvesters generate a voltage based upon temperature difference between two thermal terminals. A temperature from heat source 22 may be applied to the first thermal terminal, and heat sink 24, which is at a lower temperature than heat source 22, may be applied to the second thermal terminal. Between the two thermal terminals are one or more pairs of thermocouples that may be electrically connected in series. The voltage produced and power available from the thermoelectric device depends upon the temperature differential of heat source 22 and heat sink 24 as well as the properties and number of the thermocouples. For example, a thermoelectric device with a greater total cross-sectional area between the two thermal terminals may produce a greater power output. A thermoelectric device with a greater number of thermocouples may produce a larger voltage.

A first thermal terminal of energy harvesters 14 and 16 may be connected to a heat path, and the second thermal terminal may be connected to a cool temperature source. The heat path may be, for example, a high temperature exit path of a gas turbine compressor or air-cycle machine compressor. The first terminal may be connected to a casing of the compressor at the hot flow path to receive heat from the casing. The cool air source may be, for example, a heat sink set at the compressor inlet, or may be a natural convection heat sink configured to reject heat to the ambient air.

Power conditioning unit 18 may require a threshold voltage to turn on, such as 2.1 volts, and may require that same voltage for the duration of operation of load 16. In the past, batteries have been utilized to provide this operational voltage. However, if the battery ever falls below the threshold voltage, the system may no longer operate until the battery is able to be replaced. Replacement of a battery may be a costly process, especially if system 10 is in a remote location, such as within a gas turbine engine or within an aircraft equipment bay.

To provide the necessary turn-on and operational voltage for power conditioning unit 18, energy harvester 14 may be implemented as, for example, a high voltage, low power device, such as a thermopile. A thermopile may be implemented by connecting a plurality of small thermocouples in series. Each thermocouple generates a voltage, and the combination of the thermocouples generates a large voltage. Because the thermocouples are small, the current that may be drawn from the thermopile is low and thus, the potential power output from the thermopile is low. This low power may be enough power for conditioning unit 18, but not enough power to power load 12. Therefore, energy harvester 14 may be utilized to turn-on and operate conditioning unit 18.

To provide power for load 12, energy harvester 16 may be, for example, a lower voltage, high power device. Energy harvester 16 may be implemented, for example, as a plurality of larger thermocouples with greater cross-sectional area than those of energy harvester 14. The power produced by energy harvester 16 may be any power level sufficient to power load 12 during normal system operation, such as, for example, tens of milliwatts. Because energy harvester 16 does not need to turn-on and provide power for conditioning unit 18, the voltage produced by energy harvester 16 may be less than, for example, two volts. Power conditioning unit 18 receives this low voltage, high power input, and conditions it to provide the output power from energy harvester 16 to load 12 at greater than, for example, 3.3 volts.

By powering conditioning unit 18 using energy harvester 14, and powering load 12 using energy harvester 16, system 10 is able to power load 12 without the necessity for routed wires and without the need for a single high voltage, high power energy harvester. Thermocouples may produce a similar voltage regardless of size and power output. Therefore, if a single energy harvester were implemented to power both conditioning unit 18 and load 12, to produce the requisite voltage for conditioning unit 18, the high power energy harvester would require the same number of thermocouples as energy harvester 14. This would greatly increase the cost and weight of system 10. The combination of energy harvesters 14 and 16 therefore provide reduced weight and cost over the implementation of a single, high voltage, high power energy harvester.

Optional battery 20 may be implemented to provide voltage and power in response to energy harvester 14 providing either inadequate voltage to turn on power conditioning unit 18 or inadequate power to operate conditioning unit 18. Conditioning unit 18 may require, for example, 2.1 volts to turn on. If energy harvester 14 is not producing greater than 2.1 volts, battery 20 may be utilized to turn on conditioning unit 18. Following turn-on, conditioning unit 18 requires a low current such as, for example, approximately one hundred microamps to operate. Battery 20 may provide power for operation of conditioning unit 18 in response to energy harvester 14 not providing sufficient power to supply the necessary current to conditioning unit 18. While energy harvester 14 is generating sufficient power, battery 20 may be charged. In this way, the frequency of replacement of battery 20 is greatly reduced over prior art systems.

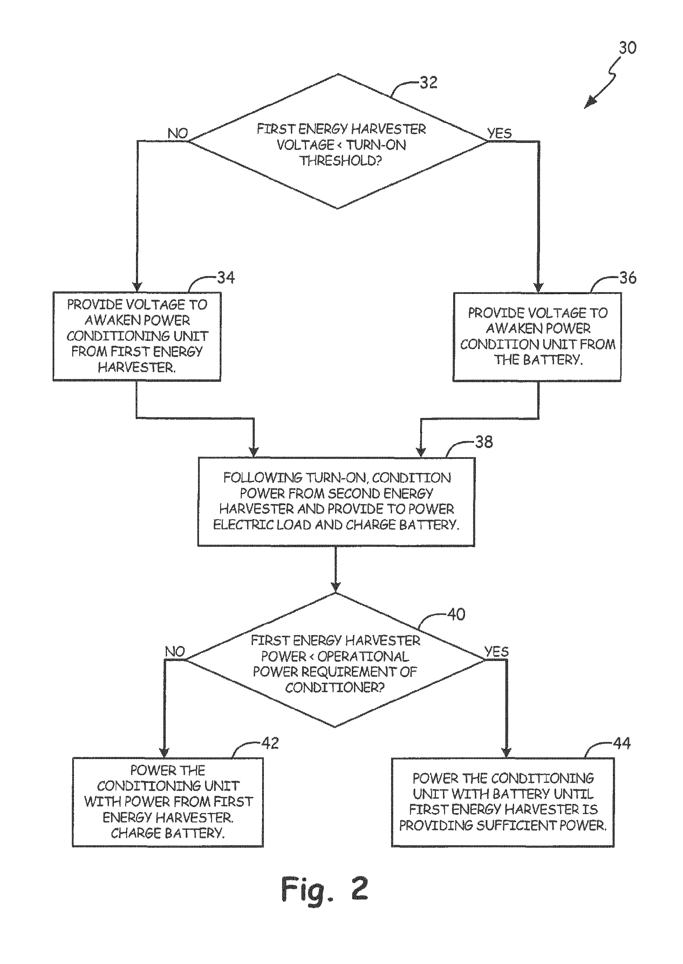

With continued reference to FIG. 1, FIG. 2 is a flowchart illustrating method 30 of powering system 10 utilizing energy harvesters 14 and 16, and backup battery 20. While battery 20 is optional, it may be included within system 10 to provide redundant power for conditioning unit 18. At step 32, if energy harvester 14 is providing a great enough voltage to turn on conditioning unit 18, method 30 proceeds to step 34 where power is provided from energy harvester 14 to turn-on power conditioning unit 18. If energy harvester 14 is not providing a great enough voltage, method 30 proceeds to step 36 where power is provided from battery 20 to turn-on power conditioning unit 18.

At step 38, once power conditioning unit 18 is turned on, power conditioning unit 18 conditions power from energy harvester 16 and provides the conditioned power to load 12. At step 40, during operation of conditioning unit 18, it is determined whether the power from energy harvester 14 is great enough for operation of power conditioning unit 18. If it is, method 30 proceeds to step 42 where energy harvester 14 provides power both to operate conditioning unit 18 as well as to charge battery 20. If the power from energy harvester 14 is not great enough to power conditioning unit 18, method 30 proceeds to step 44 where battery 20 provides power to operate conditioning unit 18 until energy harvester 14 once again provides great enough power for operation of conditioning unit 18. In this way, battery 20 is used sparingly and is recharged while not in use. This provides redundant power for system 10 while reducing or eliminating the need for replacement of battery 20 on a regular basis.

### Discussion of Possible Embodiments

The following are non-exclusive descriptions of possible embodiments of the present invention.

A power system includes a first energy harvester, a second energy harvester, a power conditioning unit, and a load. The first energy harvester is configured to produce a first voltage. The second energy harvester is configured to produce a second voltage. The first voltage is greater than the second voltage. The power conditioning unit is configured to condition power produced by the second energy harvester. The power conditioning unit is powered by the first voltage. The load is configured to receive the conditioned power from the power conditioning unit.

The system of the preceding paragraph can optionally include, additionally and/or alternatively, any one or more of the following features, configurations and/or additional components:

A further embodiment of the foregoing power system, wherein the first and second energy harvesters are thermoelectric energy harvesters.

A further embodiment of any of the foregoing power systems, wherein the power system is implemented onboard an aircraft and the load is a sensor.

A further embodiment of any of the foregoing power systems, wherein the first and second thermoelectric energy harvesters generate power from a heat path of a compressor.

A further embodiment of any of the foregoing power systems, further comprising a battery that is chargeable by the first energy harvester and configured to provide power to the power conditioning unit in response to the first energy harvester not producing a threshold power output.

A further embodiment of any of the foregoing power systems, wherein the second voltage is less than two volts and the first voltage is greater than 3.3 volts.

A method of generating power for a load includes, among other things: generating, using a first energy harvester, a first power output at a first voltage; generating, using a second energy harvester, a second power output at second voltage, wherein the second voltage is less than the first voltage, and wherein the second power output is greater than the first power output; powering a power conditioning circuit using the first power output; conditioning, using the power conditioning circuit, the second power output to produce a conditioned voltage; and powering a load using the conditioned voltage.

The method of the preceding paragraph can optionally include, additionally and/or alternatively, any one or more of the following features, configurations and/or additional components:

A further embodiment of the foregoing method, wherein the first and second energy harvesters are thermoelectric energy harvesters.

A further embodiment of any of the foregoing methods, wherein the power system is implemented onboard an aircraft and the load is a sensor.

A further embodiment of any of the foregoing methods, wherein the first and second thermoelectric energy harvesters generate power from a heat path of a compressor.

A further embodiment of any of the foregoing methods, further comprising charging a battery using the first power output in response to the first voltage being greater than a threshold value.

A further embodiment of any of the foregoing methods, further comprising powering the power conditioning circuit using an output of the battery in response to the first voltage being less than the threshold value.

A further embodiment of any of the foregoing methods, wherein the threshold value is a turn-on voltage of the power conditioning circuit.

A further embodiment of any of the foregoing methods, wherein the second voltage is less than two volts and the first voltage is greater than 3.3 volts.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A power system (10) comprising:
a first energy harvester (14) configured to produce a first power output at a first voltage;
a second energy harvester (16) configured to produce a second power output at a second voltage, wherein the second voltage is less than the first voltage, and wherein the second power output is greater than the first power output; and
a power conditioning unit (18) configured to condition the second power output to provide conditioned power to a load (12), wherein the power conditioning unit is powered by the first power output.

2. The power system of claim 1, wherein the first and second energy harvesters (14, 16) are thermoelectric energy harvesters.

3. The power system of claim 2, wherein the power system (10) is implemented onboard an aircraft and the load (12) is a sensor.

4. The power system of claim 3, wherein the first and second thermoelectric energy harvesters (14, 16) generate power from a heat path of a compressor.

5. The power system of claim 1, further comprising:
a battery (20), wherein the battery is chargeable by the first energy harvester (14) and configured to provide power to the power conditioning unit in response to the first energy harvester (14) not producing a threshold power output.

6. The power system of claim 1, wherein the second voltage is less than two volts and the first voltage is greater than 3.3 volts.

7. A method of generating power for a load (12), the method comprising:
generating, using a first energy harvester (14), a first power output at a first voltage;
generating, using a second energy harvester (16), a second power output at second voltage, wherein the second voltage is less than the first voltage, and wherein the second power output is greater than the first power output;
powering a power conditioning circuit (18) using the first power output;
conditioning, using the power conditioning circuit, the second power output to produce a conditioned voltage; and
powering a load (12) using the conditioned voltage.

8. The method of claim 7, wherein the first and second energy harvesters (14, 16) are thermoelectric energy harvesters.

9. The method of claim 7, wherein the power system (10) is implemented onboard an aircraft and the load (12) is a sensor.

10. The method of claim 8, wherein the first and second thermoelectric energy harvesters (14, 16) generate power from a heat path of a compressor.

11. The method of claim 7, further comprising:
charging a battery (20) using the first power output in response to the first voltage being greater than a threshold value.

12. The method of claim 11, further comprising:
powering the power conditioning circuit (18) using an output of the battery (20) in response to the first voltage being less than the threshold value.

13. The method of claim 12, wherein the threshold value is a turn-on voltage of the power conditioning circuit (18).

14. The power system of claim 7, wherein the second voltage is less than two volts and the first voltage is greater than 3.3 volts.
